# EUROPEAN PATENT APPLICATION

(11) **EP 4 280 508 A1**
(43) Date of publication of application: **22.11.2023**
(21) Application number: 21918438.9
(22) Date of filing: 14.01.2021
(51) Int. Cl.: H04L 5/00, H04W 72/04

(54) **BEAM INDICATION METHOD AND APPARATUS**

(71) Applicant: Beijing Xiaomi Mobile Software Co., Ltd., Beijing 100085 (CN)
(72) Inventor: LIU, Yang, Beijing 100085 (CN)
(74) Representative: dompatent von Kreisler Selting Werner - Partnerschaft von Patent- und Rechtsanwälten mbB
(86) International application number: PCT/CN2021/071881
(87) International publication number: WO 2022/151230

(57) **Abstract**

The present invention relates to the technical field of wireless communications. Provided are a beam indication method and apparatus for PUCCH transmission. The solution comprises: on the basis of beam indication information, determining a target beam used by joint transmission of target PUCCH resources for a plurality of transmission/reception points (TRPs) of a base station, wherein the beam indication information is used for indicating at least one target beam, and the target beam corresponds to the target PUCCH resources, so as to realize beam indication. Therefore, joint repeated transmission of a plurality of different PUCCH resources for a plurality of TRPs of a base station can be supported, and a better spatial diversity gain, more reliable transmission and more flexible configuration implementation can be brought about by means of the joint repeated transmission of the plurality of PUCCH resources.

## Description

### FIELD

The present invention relates to the field of mobile communications, and in particular, to a beam indication method and apparatus for a PUCCH channel transmission.

### BACKGROUND

The existing mobile communication system is used in three scenarios of enhanced mobile broadband (eMBB), massive machine type of communication (mMTC), and ultra-reliable low latency communication (URLLC).

For example, in the URLLC, a user equipment (UE) uses a physical uplink control channel (PUCCH) resource to transmit uplink control information (UCI). However, based on the existing PUCCH resource transmission methods, joint transmission of multiple PUCCH resources cannot be realized, and the delay and transmission quality cannot meet the communication requirements of low latency and high reliability of the URLLC.

### SUMMARY

In a first aspect of embodiments of the present invention, a beam indication method is provided. The method is applicable to a UE, and includes: determining, according to beam indication information, a target beam used for a target PUCCH resource for a joint transmission to multiple transmission and reception points (multi-TRPs) of a base station, where the beam indication information is configured to indicate at least one target beam.

In a second aspect of embodiments of the present invention, a beam indication method is provided. The method is applicable to a base station, and includes: sending beam indication information to a UE to instruct the UE to determine, according to the beam indication information, a target beam used for a target PUCCH resource for a joint transmission to multi-TRPs of a base station, where the beam indication information is configured to indicate at least one target beam.

In a third aspect of embodiments of the present invention, a beam indication apparatus is provided. The apparatus is applicable to a UE, and includes a determining module, configured to determine, according to beam indication information, a target beam used for a target PUCCH resource for a joint transmission to multi-TRPs of a base station, where the beam indication information is configured to indicate at least one target beam.

In a fourth aspect of embodiments of the present invention, a beam indication apparatus is provided. The apparatus is applicable to a base station, and includes a sending module, configured to send beam indication information to a UE to instruct the UE to determine, according to the beam indication information, a target beam used for a target PUCCH resource for a joint transmission to multi-TRPs of a base station, where the beam indication information is configured to indicate at least one target beam.

In a fifth aspect of embodiments of the present invention, a communication device is provided, including: at least one processor; and a memory communicatively coupled to the at least one processor. The memory stores instructions executable by the at least one processor, and the instructions are executed by the at least one processor to cause the at least one processor to implement the method in the embodiments of the first aspect or the method in the embodiments of the second aspect.

In a sixth aspect of embodiments of the present invention, a computer storage medium is provided, having stored therein computer-executable instructions that, after executed by a processor, cause the method in the embodiments of the first aspect or the method in the embodiments of the second aspect to be implemented.

### BRIEF DESCRIPTION OF THE DRAWINGS

These and other aspects and advantages of embodiments of the present invention will become apparent and more readily appreciated from the following descriptions made with reference to the drawings, in which:
FIG. 1 is a schematic diagram of a wireless communication system according to embodiments of the present invention;
FIG. 2 is a flow chart of a beam indication method according to embodiments of the present invention;
FIG. 3 is a flow chart of another beam indication method according to embodiments of the present invention;
FIG. 4 is a schematic diagram of PUCCH repetition transmission of UCI according to embodiments of the present invention;
FIG. 5 is a flow chart of a further beam indication method according to embodiments of the present invention;
FIG. 6 is a schematic diagram of a beam indication apparatus according to embodiments of the present invention;
FIG. 7 is a schematic diagram of another beam indication apparatus according to embodiments of the present invention;
FIG. 8 is a schematic diagram of a further beam indication apparatus according to embodiments of the present invention;
FIG. 9 is a schematic diagram of a further beam indication apparatus according to embodiments of the present invention;
FIG. 10 is a schematic diagram of a communication device according to embodiments of the present invention.

### DETAILED DESCRIPTION

Embodiments of the present invention are described in detail below with reference to examples illustrated in the accompanying drawings. In the drawings, the same or similar elements and the elements having same or similar functions are denoted by the same or similar reference numerals throughout the descriptions. The embodiments described below with reference to the accompanying drawings are explanatory, and are intended to explain the present invention and shall not be construed to limit the present invention.

Terms used in the embodiments of the present invention are only for the purpose of describing particular embodiments, and are not intended to limit the embodiments of the present invention. As used in the embodiments of the present invention and the appended claims, the singular forms "a", "an" and "the" are intended to include the plural forms as well, unless it is clearly specified otherwise. It will also be understood that the term "and/or" as used herein refers to and includes one or more of the associated listed items and all possible combinations thereof.

It should be understood that although the terms "first", "second", "third", etc. are used in embodiments of the present invention to describe various pieces of information, such information should not be limited to these terms. These terms are only used to distinguish the same type of information from each other. For example, without departing from the scope of the embodiments of the present invention, first information may also be referred to as second information, and similarly, the second information may also be referred to as the first information. Depending on the context, the term "if' as used herein can be interpreted as "in a case", "when" or "in response to determining that".

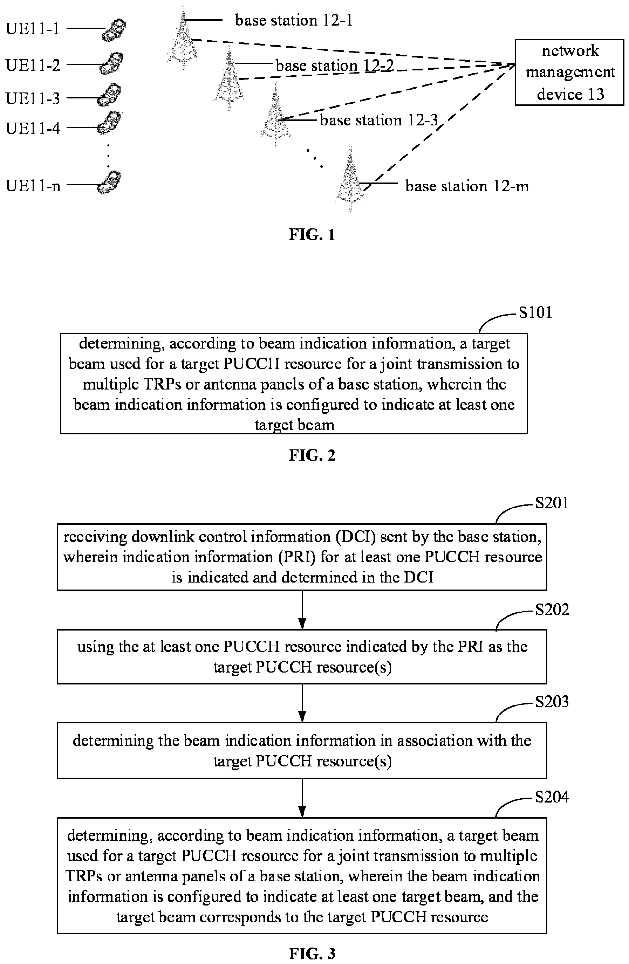

FIG. 1 is a schematic diagram of a wireless communication system according to an embodiment of the present invention. As shown in FIG. 1, the wireless communication system is a communication system based on the cellular mobile communication technology, and the wireless communication system may include: one or more UEs 11 and one or more base stations 12.

The UE 11 may be a device that provides voice and/or data connectivity to a user. The UE 11 may communicate with one or more core networks via a radio access network (RAN), and the UE 11 may be an Internet of Things (IoT) UE, such as a sensor device, a mobile phone (or a "cellular" phone) and a computer having an IoT UE. For example, the UE may be a stationary, portable, pocket-sized, hand-held, computer-built-in, or vehicle-mounted device, such as a station (STA), a subscriber unit, a subscriber station, a mobile station, a mobile, a remote station, an access point, a remote UE (a remote terminal), an access UE (an access terminal), a user terminal, a user agent, a user device, or an user equipment. For another example, the UE 11 may be a device of an unmanned aerial vehicle. For another example, the UE 11 may be an in-vehicle device, such as a trip computer with a wireless communication function, or a wireless communication device connected to an external trip computer. For another example, the UE 11 may be a roadside device, e.g., a streetlight, a signal light or other roadside device having a wireless communication function.

The base station 12 may be a network-side device in the wireless communication system. The wireless communication system may be a 4^{th} generation (4G) mobile communication system, also known as a long term evolution (LTE) system; or a 5G system, also known as a new radio (NR) system or a 5G NR system. Alternatively, the wireless communication system may be a next-generation system of the 5G system. The access network in the 5G system may be called a new generation-radio access network (NG-RAN). Alternatively, the wireless communication system may be an MTC system.

The base station 12 may be an evolved base station (eNB) used in the 4G system. Alternatively, the base station 12 may be a base station (gNB) that adopts a centralized distributed architecture in the 5G system. When the base station 12 adopts the centralized distributed architecture, it usually includes a central unit (CU) and at least two distributed units (DUs). The central unit is provided with a protocol stack of a packet data convergence protocol (PDCP) layer, a radio link control (RLC) layer, and a media access control (MAC) layer. The distributed unit is provided with a physical (PHY) layer protocol stack. The specific implementation manner of the base station 12 is not limited in the embodiments of the present invention.

A wireless connection can be established between the base station 12 and the UE 11 through a wireless radio interface. In different embodiments, the wireless radio interface is a wireless radio interface based on the fourth generation (4G) mobile communication network technology standard; or the wireless radio interface is a wireless radio interface based on the fifth generation (5G) mobile communication network technology standard, such as a new radio interface; or the wireless radio interface is a wireless radio interface based on a next-generation (from 5G) mobile communication network technology standard.

In some embodiments, an end-to-end (E2E) connection is established between the UEs 11, for example, vehicle to everything (V2X) communication, such as vehicle to vehicle (V2V) communication, vehicle to infrastructure (V2I) communication and vehicle to pedestrian (V2P) communication.

In some embodiments, the above wireless communication system may further include a network management device 13.

Several base stations 12 are respectively connected to the network management device 13. The network management device 13 may be a core network device in the wireless communication system, for example, the network management device 13 may be a mobility management entity in an evolved packet core (EPC) network.

It should be noted that, multiple transmission and reception point (multi-TRP) joint transmission technology uses transmission and reception points (TRPs) for transmission in the scenario of the enhanced mobile broadband (eMBB), and effectively improves transmission throughput for the long term evolution (LTE), the long term evolution-advanced (LTE-A) and the new radio access technology. Another technology of NR is multi-panel transmission, which utilizes multiple antenna panels for transmission to acquire a high spectral efficiency. Meanwhile, the reliability of the transmission in the communication system also need to be guaranteed. The transmission or reception of the multiple TRPs or the multiple panels may be performed repeatedly, so as to improve the probability of acquiring correct information for a receiving end, and effectively improve the reliability of the transmission in the scenario of the ultra-reliable low latency communication (URLLC).

TRP-related operations involved in all the embodiments of the present invention can be performed by the antenna panel. That is, any operation that is performed on multiple TRPs or performed by multiple TRPs is applicable to be performed on multiple antenna panels or performed by multiple antenna panels.

FIG. 2 is a flow chart of a beam indicating method according to embodiments of the present invention. As shown in FIG. 2, the method is performed by a UE and includes the following operation.

In block 101, a target beam used for a target PUCCH resource for a joint transmission to multiple transmission and reception points (multi-TRPs) of a base station is determined according to beam indication information, where the beam indication information is configured to indicate at least one target beam.

In the embodiments of the present invention, the target PUCCH resource may be determined based on a plurality of PUCCH resources. Optionally, the target PUCCH resource for the joint transmission to the multi-TRPs of the base station indicated by a network device for the UE may be determined according to control signaling sent by the network device such as the base station. Further, the target beam for the target PUCCH resource may be determined from a plurality of candidate beams according to the beam indication information.

The control signaling carries the target PUCCH resource for the joint transmission to the multi-TRPs of the base station indicated by the network device for the UE. In this case, after the UE acquires the control signaling, it can determine, based on the control signaling, the target PUCCH resource for the joint transmission to the multi-TRPs of the base station indicated by the network device for the UE.

In all the embodiments of the present invention, the method can also be applied to a technical solution of multiple antenna panel joint transmission. In this technical solution, the operation in block 101 is: determining, according to beam indication information, a target beam used for a target PUCCH resource for a joint transmission to multiple antenna panels of a base station, where the beam indication information is configured to indicate at least one target beam.

It should be noted that, in all the embodiments of the present invention, the method can also be applied to a technical solution of any joint transmission.

In another embodiment, the target PUCCH resource indicated for the UE that supports the joint transmission to multiple antenna panels of the base station is determined according to the control signaling sent by the UE. In yet another embodiment, the target PUCCH resource that supports the joint transmission to the base station indicated for the UE may be determined according to the control signaling sent by the UE.

The above-mentioned control signaling may be high layer signaling or physical layer signaling, and the high layer signaling includes radio resource control (RRC) signaling and/or medium access control (MAC) control unit (CE) signaling (i.e., MAC-CE signaling), the physical layer signaling may be downlink control information (DCI).

One or more target PUCCH resources as described above exist, which is not specifically limited in the embodiments. In practical applications, the number of target PUCCH resources may be indicated according to actual requirements.

In some embodiments, there is one target PUCCH resource. In this case, in order to implement multiple transmissions, the target PUCCH resource may correspond to multiple different beams. For example, the above-mentioned target PUCCH resource corresponds to two different beams. That is, in an embodiment, in order to implement the multi-TRP transmission, the one target PUCCH resource corresponds to different beams. Similarly, in order to support the multi-antenna panel joint transmission, the one target PUCCH resource may correspond to different beams.

In other embodiments, there are multiple target PUCCH resources. In this case, each of the target PUCCH resources may correspond to one beam or different beams, which are not specifically limited in the embodiments.

For example, there are two target PUCCH resources, and each target PUCCH resource corresponds to one beam, or each target PUCCH resource corresponds to two beams, or one of the two target PUCCH resources corresponds to one beam and the other one of the two target PUCCH resources corresponds to two beams.

With the beam indication method according to the embodiments of the present invention, the UE can determine, according to the beam indication information, the target beam used for the target PUCCH resource for the joint transmission to the multi-TRPs of the base station, where the beam indication information is configured to indicate at least one target beam, so as to realize the beam indication, thus supporting the joint repetition transmission of different PUCCH resources to the multiple TRPs or multiple antenna panels of the base station. Further, the joint repetition transmission of the PUCCH resources may realize a higher spatial diversity gain, a more reliable transmission and a more flexible configuration.

It should be noted that, in the present invention, the target PUCCH resource may be determined according to PUCCH resource indication information (PRI), and the beam indication information is determined accordingly.

In a possible implementation, as shown in FIG. 3, the beam indication method specifically includes the following operations.

In block 201: downlink control information (DCI) sent by the base station is received, indication information (PRI) for at least one PUCCH resource is indicated and determined in the DCI.

In the embodiment of the present invention, the base station may send the downlink control information (DCI) to the UE, and accordingly, the UE may receive the DCI, and acquire the indicated and determined PRI according to the DCI.

In block 202, the at least one PUCCH resource indicated by the PRI is used as the target PUCCH resource(s).

It should be noted that each PRI can indicate at least one PUCCH resource. Therefore, in the embodiment of the present invention, after the PRI is acquired, the at least one PUCCH resource indicated by each PRI can be used as the target PUCCH resource(s). For example, a PUCCH indicated by PRI1 is PUCCH1, and PUCCH1 can be used as the target PUCCH resource.

In block 203, the beam indication information in association with the target PUCCH resource(s) is determined.

In the embodiment of the present invention, after the target PUCCH resource is determined, the association between the PUCCH resource and the beam used in the joint transmission may be determined according to a preset rule, and beam indication information corresponding to the target PUCCH resource(s) may be determined according to the association.

Specifically, corresponding to the PRI in the DCI, the beam indication information corresponding to independent indication may be acquired, for example, the PRI corresponds to spatialRelationInfo; the beam indication information corresponding to joint indication may be acquired, and determined beam correspondence relationship for e.g., PRI1 and PRI2 can be that PRI1 corresponds to spatialRelationInfo 1 and PRI2 corresponds to spatialRelationInfo2.

In block 204: a target beam used for the target PUCCH resource for a joint transmission to multi-TRPs of a base station is determined according to the beam indication information, where the beam indication information is configured to indicate at least one target beam.

In all the embodiments of the present invention, the method can also be applied to the technical solution of the multi-antenna panel joint transmission. That is, operation in block 204 is: determining, according to the beam indication information, a target beam used for the target PUCCH resource for a joint transmission to multiple antenna panels of the base station, where the beam indication information is configured to indicate at least one target beam.

Further, in the present invention, the UE may determine the beam indication information in various ways. Optionally, the UE may receive the RRC signaling sent by the base station. Optionally, the UE may receive the MAC-CE signaling sent by the base station.

In a possible implementation, the UE may receive the RRC signaling sent by the base station. In the RRC signaling, a candidate beam set or a candidate beam combination set is configured, and at least one target beam belongs to the candidate beam set or the candidate beam combination collection.

Optionally, a set of candidate beams to be selected for the PUCCH resource is configured by the RRC. The candidate beam set includes multiple candidate beams, and the candidate beams are independent from each other, that is, the RRC signaling is delivered in a form of a set.

Optionally, a set of candidate beam combinations available for the PUCCH joint transmission is configured by the RRC. Each item of the set may include a joint indication of {spatialRelationInfo1, spatialRelationInfo2}.

It should be noted that the candidate beam at least includes beams that can be used for the joint transmission to the multi-TRPs of the base station. Optionally, the set of candidate beam combinations only includes a candidate beam combination corresponding to multi-TRPs. Optionally, the set of candidate beam combinations also includes a configurable candidate beam combination corresponding to single-TRP. In another embodiment, the candidate beam at least includes beams that can be used for the joint transmission to the multi-panels of the base station. Optionally, the set of candidate beam combinations only includes a candidate beam combination corresponding to multi-panels. Optionally, the set of candidate beam combinations also includes a configurable candidate beam combination corresponding to a single panel. It should be noted that the RRC signaling can also be delivered in a form of a group, where beams in the group are associated. Therefore, in the present invention, the candidate beam combination set that can be used for the PUCCH joint transmission can be configured by the RRC based on beam management or other known information.

In this case, the beam indication information is a code point corresponding to a candidate beam combination. Each candidate beam combination includes at least one candidate beam. In this case, the target beam combination can be determined from the candidate beam combination set based on the code point, where the target beam belongs to the target beam combination.

In the embodiments of the present invention, in order to determine the target beam combination from the set of candidate beam combinations based on the code point, the configuration may be performed through RRC signaling.

Optionally, in response to determining existence of a mapping relationship between the code point and the beam combination in the UE, for each beam combination, based on the code point acquired from the DCI and the beam combination, by querying the mapping relationship, a beam combination matched to the code point is acquired, so as to determine the target beam combination from the candidate beam combination set.

In another possible implementation, the UE may receive a MAC-CE signaling sent by the base station, and the MAC-CE signaling indicates that the beam indication information is configured to activate the target beam for the joint transmission.

Optionally, the MAC-CE configures one spatialRelationInfo or at most two spatialRelationInfos (e.g., spatialRelationInfo1 and spatialRelationInfo2), for the multi-TRP joint transmission. The beam information for the joint transmission independently indicates one or two PUCCH resource sets where the PUCCH resource activated by the MAC-CE and suitable for the joint transmission is located. Optionally, one or two PUCCH resource sets are activated, and in this case two spatialRelationInfos are configured, it corresponds to multi-TRP transmission. Optionally, one PUCCH resource set is activated, and in this case, one spatialRelationInfo is configured, it corresponds to single-TRP transmission.

Further, uplink control information (UCI) is transmitted on the target PUCCH resource with the target beam jointly and repeatedly to the multiple TRPs of the base station. In another embodiment, the uplink control information (UCI) is transmitted on the target PUCCH resource with the target beam jointly and repeatedly to the multiple panels of the base station.

It can be understood that different PUCCH resources may correspond to different PUCCH formats.

PUCCH is an uplink physical channel in the NR system, which carries the uplink control information (UCI).

In order to support transmissions of different UCI bit ranges, five PUCCH frame formats are defined in the NR system. Examples of PUCCH parameters in the PUCCH formats are shown in Table 1.

**Table 1 Parameters of PUCCH in PUCCH format**

| PUCCH format | | Symbol length | | Number of resource block | | Number of bit carried | |
|---|---|---|---|---|---|---|---|
| | 0 | | 1-2 | | 1 | | ≤2 |
| | 1 | | 4-14 | | 1 | | ≤2 |
| | 2 | | 1-2 | | 1,2,..,16 | | >2 |
| | 3 | | 4-14 | | 1,2,3,4,5,6,8,9,10,12,15,16 | | >2 |
| | 4 | | 4-14 | | 1 | | >2 |

It can be seen from Table 1 that PUCCH formats 0 and 1 can only carry data of less than or equal to 2 bits, while PUCCH formats 2, 3 and 4 can carry data of more than 2 bits.

It can be understood that each element and each corresponding relationship in Table 1 exist independently. These elements and corresponding relationships are exemplarily listed in the table, but concurrence of these elements and the corresponding relationships as shown in Table 1 is not required. The value of each element and the corresponding relationship are independent from any other element values or their corresponding relationships in Table 1. Therefore, those skilled in the art can understand that the value of each element and the corresponding relationship in Table 1 can be considered as an independent embodiment.

In some embodiments of the present application, the above-mentioned PUCCH resources include the following parameters: a PUCCH resource index (PUCCH-ResourceId), a starting physical resource block (PRB) index (startingPRB), an inter-slot frequency hopping mode (intraSlotFrequencyHopping), and a configured PUCCH format (from format 0 to format 4).

In a case where a plurality of target PUCCH resources exists, in order to improve the transmission quality, the target PUCCH resources do not overlap at all in the time-frequency domain. In a case where a plurality of target PUCCH resources exists, the target PUCCH resources do not completely overlap in the time-frequency domain.

In some embodiments, in a service scenario where a target PUCCH resource is indicated for the UE to transmit the UCI and repetition transmission is performed in the intra-slot mode, the UE may repeat the transmission of the UCI on the target PUCCH resource(s) in a preset one or more slots (for example one slot) according to the number of transmissions (i.e., repetition times).

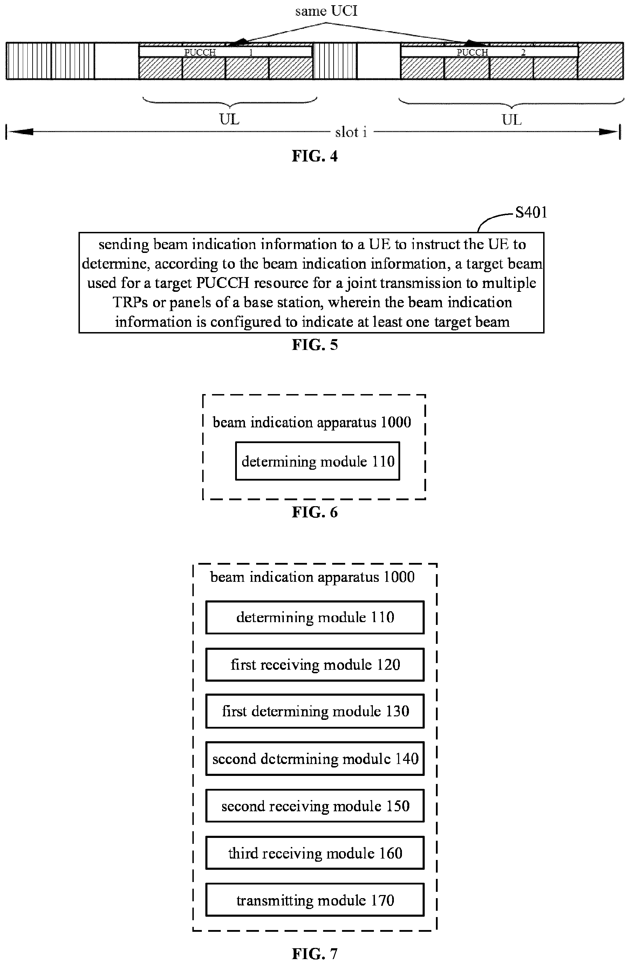

For example, there is one target PUCCH resource and the number N of transmissions is two, repetition transmissions of the target PUCCH resource carrying the same UCI are performed in one slot, as shown in FIG. 4.

It should be noted that, in the embodiments, the above-mentioned target PUCCH resource correspond to different beams that support the joint transmission to the multi-TRPs of the base station.

The number of transmissions of a transmission occasion corresponding to a beam may be acquired by dividing the number N of repetition transmissions of the target PUCCH resource according to a preset rule.

In other embodiments, in a case where one target PUCCH resource is used to transmit the UCI, and the repetition transmission is performed in an inter-slot mode to repeatedly transmit the UCI to multiple TRPs of the base station, the UE may repeat the transmission of the UCI carried by the target PUCCH resource in the multiple slots according to the number N of repetition transmissions of the target PUCCH resource. In other embodiments, in a case where one target PUCCH resource is used to transmit the UCI, and the repetition transmission is performed in the inter-slot mode to repeatedly transmit the UCI to multiple panels of the base station, the UE may repeat the transmission of the UCI carried by the target PUCCH resource in the multiple slots according to the number N of repetition transmissions of the target PUCCH resource, where N is greater than 1.

It can be understood that, in order to improve the reliability of the transmission, the above-mentioned multiple slots are adjacent in sequence, that is, the above-mentioned multiple slots are consecutive.

In still other embodiments, in a scenario where a plurality of target PUCCH resources is used to transmit the UCI, and multiple slots are used for the repetition transmission, the UE may acquire the number of repetition transmissions of each target PUCH resource, and based on the number of repetition transmissions of each target PUCH resource, repeatedly transmit the UCI to multiple TRPs of the base station in the slots. In yet still other embodiments, in a scenario where a plurality of target PUCCH resources is used to transmit the UCI and multiple slots are used for the repetition transmission, the UE may acquire the number of repetition transmissions of each target PUCH resource, and based on the number of repetition transmissions of each target PUCH resource, repeatedly transmit the UCI to multiple panels of the base station in the multiple slots.

In further other embodiments, in a scenario where a plurality of target PUCCH resources is used to transmit the UCI, and the repetition transmission is performed in one slot, the UE may acquire the number of repetition transmissions of each target PUCH resource, and based on the number of repetition transmissions of each target PUCH resource, repeatedly transmit the UCI to multiple TRPs of the base station in the one slot. In still further other embodiments, in a scenario where a plurality of target PUCCH resources is used to transmit the UCI, and the repetition transmission is performed in one slot, the UE may acquire the number of repetition transmissions of each target PUCH resource, and based on the number of repetition transmissions of each target PUCH resource, repeatedly transmit the UCI to multiple panels of the base station in the one slot.

It should be noted that the number of repetition transmissions corresponding to each of the target PUCH resources may be the same or different, or some of the numbers may be the same, which is not specifically limited in the embodiments.

For example, the number of the target PUCCH resources is two, and the number of repetition transmissions corresponding to the first target PUCCH resource is two, and the number of repetition transmissions corresponding to the second target PUCC resource is one. In one slot, based on the number of repetition transmissions corresponding to the first target PUCCH resource, the first target PUCCH resource is used to repeatedly transmit the UCI to multiple TRPs of the base station, and based on the number of repetition transmissions corresponding to the second target PUCCH resources, the second target PUCCH resource is used to repeatedly transmit the UCI to multiple TRPs of the base station. The DUI carried by the first target PUCCH resource and the second target PUCCH resource are same.

The number N of repetition transmissions is an integer greater than or equal to 1. For example, the number of repetition transmissions may be 2, 4, or 8, which is not specifically limited in the embodiments.

In some embodiments, the number of repetition transmissions may be configured for the UE by high layer signaling.

Specifically, the UE may receive the high layer signaling sent by the UE, the high layer signaling carries data of the number of repetition transmissions of the target PUCCH resource. Correspondingly, once the UE determines that the UCI needs to be transmitted, the UE repeatedly performs the transmission with the target PUCCH resource(s) according to the number of repetition transmissions of the target PUCCH resource(s).

In some embodiments, adoption of the intra-slot mode or the inter-slot mode of the repetition transmission is determined based on instruction signaling sent by the base station, he instruction signaling includes the repetition transmission mode, and the repetition transmission mode is the intra-slot repetition transmission mode or the inter-slot repetition transmission mode. In other embodiments, it may be determined by the UE according to a repetition transmission rule in a communication protocol standard adopted by the UE and the base station.

In some embodiments, the above-mentioned high layer signaling is RRC signaling. In other embodiments, the above-mentioned high layer signaling is RRC signaling and MAC-CE signaling.

With the beam indication method according to the embodiments of the present invention, the UE can jointly and repeatedly transmit the UCI to the multiple TRPs of the base station on the target PUCCH resource using the target beam. In this way, transmission and feedback of the UCI are improved by using the multiple TRPs or panels, and different PUCCH resources corresponding to beams that are different in directions are jointed/combined to perform the repetition transmission of the UCI, thus improving the quality and the reliability of the transmission of the uplink control information, and satisfying the communication requirements of ultra-reliable and ultra-low latency communication services.

FIG. 5 is a flow chart of another beam indication method according to embodiments of the present invention. As shown in FIG. 5, the method is performed by the base station, and includes the following operation.

In block 401, beam indication information is sent to a UE to instruct the UE to determine, according to the beam indication information, a target beam used for a target PUCCH resource for a joint transmission to multi-TRPs of a base station, where the beam indication information is configured to indicate at least one target beam.

In the embodiments of the present invention, the base station may send the beam indication information to the UE, and accordingly, the UE may receive the beam indication information, and according to the beam indication information, determine the target beam to be used for the target PUCCH resource for the joint transmission to the multi-TRPs of the base station.

With the beam indication method according to the embodiments of the present invention, the base station may send beam indication information to the UE to instruct the UE to determine, according to the beam indication information, the target beam used for the target PUCCH resource for the joint transmission to the multi-TRPs of the base station, where the beam indication information is configured to indicate at least one target beam, so as to realize the beam indication, thus supporting the joint repetition transmission of different PUCCH resources to the multiple TRPs or multiple antenna panels of the base station. Further, the joint repetition transmission of the PUCCH resources may realize a higher spatial diversity gain, a more reliable transmission and a more flexible configuration.

In all the embodiments of the present invention, the method can also be applied to a technical solution of multiple antenna panel joint transmission. In this technical solution, the operation in block 401 is: sending beam indication information to a UE to instruct the UE to determine, according to the beam indication information, a target beam used for a target PUCCH resource for a joint transmission to multi-panels of a base station, where the beam indication information is configured to indicate at least one target beam.

It should be noted that, in all the embodiments of the present invention, the method can also be applied to a technical solution of any joint transmission.

Further, in the present invention, the base station may send the beam indication information to the UE in various ways. Optionally, the base station may send RRC signaling to the UE. Optionally, the base station may send MAC-CE signaling to the UE.

In a possible implementation, the base station may send the RRC signaling to the UE, a candidate beam set or a candidate beam combination set is configured in the RRC signaling, and at least one target beam belongs to the candidate beam set or the candidate beam combination set. Correspondingly, the UE can receive the RRC signaling. Optionally, a set of candidate beams to be selected for the PUCCH resource is configured by the RRC, and the candidate beams are at least beams that can be used for the joint transmission to the multi-TRPs of the base station. Optionally, the candidate beams are at least beams that can be used for the joint transmission to the multi-panels of the base station. The candidate beam set includes multiple candidate beams, and the candidate beams are independent from each other, that is, the RRC signaling is delivered in a form of a set. Optionally, a set of candidate beam combinations available for the PUCCH joint transmission is configured by the RRC. Each item of the set may include a joint indication of {spatialRelationInfo1, spatialRelationInfo2}.

In another possible implementation, the base station may send the MAC-CE signaling to the UE, and the MAC-CE signaling indicates the beam indication information for activating the target beam for the joint transmission. Correspondingly, the UE may receive the MAC-CE signaling. Optionally, the MAC-CE configures one spatialRelationInfo or at most two spatialRelationInfos (e.g., spatialRelationInfo1 and spatialRelationInfo2), for the multi-TRP joint transmission.

In the embodiment of the present invention, the base station sends DCI to the UE, and in the DCI, indication information (PRI) for at least one PUCCH resource is indicated and determined. Correspondingly, the UE can receive the DCI, determine at least one PUCCH resource indicated by each PRI as the target PUCCH resource(s) according to the DCI, determine the beam indication information in association with the target PUCCH resource(s), and thus determine, according to the beam indication information, the target beam used for the target PUCCH resource for the joint transmission to the multi-TRPs of the base station.

In some embodiments, the base station sends the DCI to the UE, and in the DCI, indication information (PRI) for at least one PUCCH resource is indicated and determined. Correspondingly, the UE can receive the DCI, determine at least one PUCCH resource indicated by each PRI as the target PUCCH resource(s) according to the DCI, determine the beam indication information in association with the target PUCCH resource(s), and thus determine, according to the beam indication information, the target beam used for the target PUCCH resource for the joint transmission to the multi-panels of the base station.

It should be noted that, in response to two or more target beams, beam indication information may be sent to the UE as independent indications sent separately or as a joint indication.

Optionally, first beam indication information for the joint transmission is sent to the UE. Optionally, second beam indication information corresponding to each target beam is sent to the UE separately.

It should be noted that the RRC signaling can also be delivered in a form of a group, where beams in the group are associated. Therefore, in the present invention, the candidate beam combination set that can be used for the PUCCH joint transmission can be configured by the RRC based on beam management or other known information.

In this case, each candidate beam combination includes at least one candidate beam, and the beam indication information is a code point corresponding to a candidate beam combination. The code point is used to instruct the UE to determine the target beam combination from the set of candidate beam combinations, and the target beam belongs to the target beam combination.

Further, the base station may receive the UCI that is jointly and repeatedly transmitted on the target PUCCH resource using the target beam for multi-TRP or multi-panel of the base station.

It can be understood that different PUCCH resources may correspond to different PUCCH formats.

The PUCCH is an uplink physical channel carrying the UCI in a new radio (NR) system.

In a case where a plurality of target PUCCH resources exists, in order to improve the transmission quality, the target PUCCH resources do not overlap at all in the time-frequency domain.

In some embodiments, in a service scenario where one target PUCCH resource is indicated for the UE to transmit the UCI and one slot is used for repetition transmission, the UE repeatedly transmits the UCI on the target PUCCH resource within the slot according to the number N of repetition transmissions of the target PUCCH resource, to realize the repetition transmission of the UCI.

In other embodiments, in a case where one target PUCCH resource is used to transmit the UCI, and the repetition transmission is performed in an inter-slot mode to repeatedly transmit the UCI to multiple TRPs of the base station, the UE may repeat the transmission of the UCI carried by the target PUCCH resource in the multiple slots according to the number N of repetition transmissions of the target PUCCH resource, where N is an integer greater than 1.

In still other embodiments, in a case where one target PUCCH resource is used to transmit the UCI, and the repetition transmission is performed in the inter-slot mode to repeatedly transmit the UCI to multiple panels of the base station, the UE may repeat the transmission of the UCI carried by the target PUCCH resource in the multiple slots according to the number N of repetition transmissions of the target PUCCH resource, where N is greater than 1. It can be understood that, in order to improve the reliability of the transmission, the above-mentioned multiple slots are adjacent in sequence, that is, the above-mentioned multiple slots are consecutive.

In yet still other embodiments, in a scenario where a plurality of target PUCCH resources is used to transmit the UCI, and multiple slots are used for the repetition transmission, the UE may acquire the number of repetition transmissions of each target PUCH resource, and based on the number of repetition transmissions of each target PUCH resource, repeatedly transmit the UCI to multiple TRPs of the base station in the slots.

In further embodiments, in a scenario where a plurality of target PUCCH resources is used to transmit the UCI and multiple slots are used for the repetition transmission, the UE may acquire the number of repetition transmissions of each target PUCH resource, and based on the number of repetition transmissions of each target PUCH resource, repeatedly transmit the UCI to multiple panels of the base station in one slot.

In further embodiments, in a scenario where a plurality of target PUCCH resources is used to transmit the UCI, and the repetition transmission is performed in one slot, the UE may acquire the number of repetition transmissions of each target PUCH resource, and based on the number of repetition transmissions of each target PUCH resource, repeatedly transmit the UCI to multiple TRPs of the base station in the one slot.

In further embodiments, in a scenario where a plurality of target PUCCH resources is used to transmit the UCI, and the repetition transmission is performed in one slot, the UE may acquire the number of repetition transmissions of each target PUCH resource, and based on the number of repetition transmissions of each target PUCH resource, repeatedly transmit the UCI to multiple antenna panels of the base station in the one slot.

In some embodiments, the number of repetition transmissions may be configured for the UE by high layer signaling.

Specifically, the UE may receive the high layer signaling sent by the UE, the high layer signaling carries data of the number of repetition transmissions of the target PUCCH resource. Correspondingly, once the UE determines that the UCI needs to be transmitted, the UE repeatedly performs the transmission with the target PUCCH resource(s) according to the number of repetition transmissions of the target PUCCH resource(s).

With the beam indication method according to the embodiments of the present invention, the base station can receive the UCI that is jointly and repeatedly transmitted to the multiple TRPs of the base station on the target PUCCH resource using the target beam. In this way, transmission and feedback of the UCI are improved by using the multiple TRPs or panels, and different PUCCH resources corresponding to beams that are different in directions are jointed/combined to perform the repetition transmission of the UCI, thus improving the quality and the reliability of the transmission of the uplink control information, and satisfying the communication requirements of ultra-reliable and ultra-low latency communication services.

In the embodiments of the present invention, optionally, the base station may instruct the UE to activate at least one PUCCH resource set in response to adopting multi-TRP joint transmission, and the beam indication information sent to the UE is used to indicate at least one target beam. Optionally, the base station may instruct the UE to activate one PUCCH resource set in response to adopting single TPR transmission, and the beam indication information sent to the UE is used to indicate one target beam.

In other embodiments, the base station may instruct the UE to activate at least one PUCCH resource set in response to adopting multi-panel joint transmission, and the beam indication information sent to the UE is used to indicate at least one target beam. Optionally, the base station may instruct the UE to activate one PUCCH resource set in response to adopting single panel transmission, and the beam indication information sent to the UE is used to indicate one target beam.

Therefore, the beam indication method provided in the present invention is capable of supporting the joint repetition transmission of multiple different PUCCH resources to multiple TRPs or antenna panels of the base station. Further, the joint repetition transmission of the PUCCH resources may realize a higher spatial diversity gain, a more reliable transmission and a more flexible configuration.

Corresponding to the beam indication method provided in the above-mentioned embodiments, the present invention further provides a beam indication apparatus. Since the beam indication apparatus provided by the embodiments of the present invention corresponds to the method provided by the above-mentioned embodiments, the implementations of the method is also applicable to the beam indicating apparatus provided in the embodiments, which is not described in detail in the embodiments. FIGS. 6-9 are block diagrams of a beam indication apparatus provided according to the present invention.

FIG. 6 is a block diagram of a beam indication apparatus according to embodiments of the present invention. As shown in FIG. 6, the beam indication apparatus 1000, applicable to a UE, includes: a determining module 110, configured to determine, according to beam indication information, a target beam used for a target PUCCH resource for a joint transmission to multi-TRPs of a base station, where the beam indication information is configured to indicate at least one target beam.

In the embodiments of the present invention, the apparatus can also be applied to the technical solution of the multiple antenna panel joint transmission. The determining module 110 is configured to determine, according to the beam indication information, a target beam used for a target PUCCH resource for a joint transmission to multi-panels of a base station, where the beam indication information is configured to indicate at least one target beam.

In some embodiments of the present invention, as shown in FIG. 7, the beam indication apparatus 1000 in FIG. 6 further includes: a first receiving module 120, configured to receive DCI sent by the base station, where indication information (PRI) for at least one PUCCH resource is indicated and determined in the DCI; a first determining module 130, configured to use a PUCCH indicated by the PRI as the target PUCCH resource; and a second determining module 140, configured to determine the beam indication information in association with the target PUCCH resource(s).

In some embodiments of the present invention, as shown in FIG. 7, the beam indication apparatus 1000 in FIG. 6 further includes: a second receiving module 150, configured to receive RRC signaling sent by the base station, in which a candidate beam set or a candidate beam combination set is configured in the RRC signaling, and the at least one target beam belongs to the candidate beam set or the candidate beam combination set; and a third receiving module 160, configured to receive MAC-CE signaling sent by the base station, in which the MAC-CE signaling indicates the beam indication information for activating the target beam for the joint transmission.

In some embodiments of the present invention, candidate beams in the candidate beam set are independent from each other.

In some embodiments of the present invention, the second receiving module 500 is further configured to determine, according to the code point, a target beam combination from the candidate beam combination set, where the target beam belongs to the target beam combination.

In some embodiments of the present invention, the candidate beam at least includes a beam for the joint transmission to the multi-TRPs of the base station. Optionally, the candidate beam at least includes a beam for the joint transmission to the multi-panels of the base station.

In some embodiments of the present invention, as shown in FIG. 7, the beam indication apparatus 1000 in FIG. 6 further includes: a transmitting module 170, configured to jointly and repeatedly transmit UCI on the target PUCCH resource with the target beam to multiple TRPs of the base station.

In all the embodiments of the present invention, the apparatus can also be applied to the technical solution of the multiple antenna panel joint transmission. The transmitting module 170 is configured to jointly and repeatedly transmit UCI on the target PUCCH resource with the target beam to multiple panels of the base station.

With the beam indication apparatus according to the embodiments of the present invention, the user equipment can determine, according to the beam indication information, the target beam used for the target PUCCH resource for the joint transmission to the multi-TRPs of the base station, where the beam indication information is configured to indicate at least one target beam, to realize the beam indication, thus supporting the joint repetition transmission of different PUCCH resources to the multiple TRPs or multiple antenna panels of the base station. Further, the joint repetition transmission of the PUCCH resources may realize a higher spatial diversity gain, a more reliable transmission and a more flexible configuration.

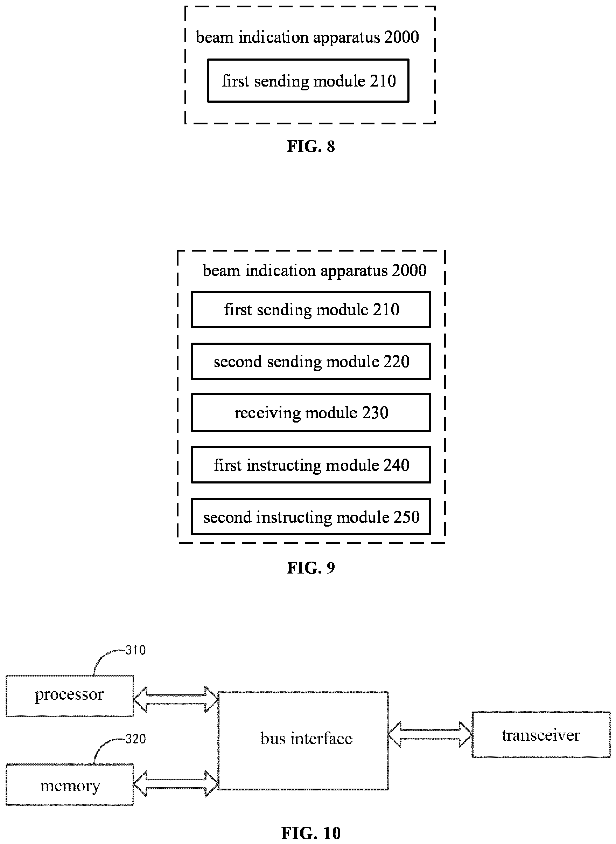

FIG. 8 is a schematic diagram of a beam indication apparatus according to embodiments of the present invention. As shown in FIG. 8, the beam indication apparatus 2000, applicable to a base station, includes: a first sending module 210, configured to send beam indication information to a UE to instruct the UE to determine, according to the beam indication information, a target beam used for a target PUCCH resource for a joint transmission to multi-TRPs of a base station, where the beam indication information is configured to indicate at least one target beam.

In all the embodiments of the present invention, the apparatus can also be applied to the technical solution of the multiple antenna panel joint transmission. The first sending module 210 is configured to send beam indication information to the UE to instruct the UE to determine, according to the beam indication information, a target beam used for a target PUCCH resource for a joint transmission to multi-panels of a base station, where the beam indication information is configured to indicate at least one target beam.

In some embodiments of the present invention, the first sending module 210 is further configured to send RRC signaling to the UE, in which a candidate beam set or a candidate beam combination set is configured in the RRC signaling, and the at least one target beam belongs to the candidate beam set or the candidate beam combination set; or send MAC-CE signaling to the UE, in which the MAC-CE signaling indicates the beam indication information for activating the target beam for the joint transmission.

In some embodiments of the present invention, as shown in FIG. 9, the beam indication apparatus 2000 in FIG. 8 further includes: a second sending module 220, configured to send DCI to the UE, in which indication information (PRI) for at least one PUCCH resource is indicated and determined in the DCI.

In some embodiments of the present invention, in response to determining that the number of the target beams is two or more, the first sending module 210 is further configured to send first beam indication information for the joint transmission to the UE; or send second beam indication information corresponding to each of the target beams to the UE separately.

In some embodiments of the present invention, candidate beams in the candidate beam set are independent from each other.

In some embodiments of the present invention, each candidate beam combination includes at least one candidate beam, and the beam indication information is a code point corresponding to a candidate beam combination, and the code point is used to instruct the UE to determine, according to the code point, a target beam combination from the candidate beam combination set, in which the target beam belongs to the target beam combination.

In some embodiments of the present invention, the candidate beam at least is a beam available for the joint transmission to the multi-TRPs of the base station.

In some embodiments of the present invention, as shown in FIG. 9, the beam indication apparatus 2000 in FIG. 8 further includes: a receiving module 230, configured to receive UCI that is jointly and repeatedly transmitted on the target PUCCH resource with the target beam to multiple TRPs of the base station.

In all the embodiments of the present invention, the apparatus can also be applied to the technical solution of the multiple antenna panel joint transmission. The receiving module 230 is configured to receive UCI that is jointly and repeatedly transmitted on the target PUCCH resource with the target beam to multiple panels of the base station.

In some embodiments of the present invention, as shown in FIG. 9, the beam indication apparatus 2000 in FIG. 8 further includes: a first instructing module 240, configured to instruct the UE to activate at least one PUCCH resource set in response to using multi-TPR or multi-plane joint transmission, where the beam indication information sent to the UE indicates at least one target beam; and a second instructing module 250, configured to instruct the UE to activate one PUCCH resource set in response to single TPR or plane transmission, where the beam indication information sent to the UE indicates one target beam.

With the beam indication method according to the embodiments of the present invention, the base station sends the beam indication information to the UE to instruct the UE to determine, according to the beam indication information, the target beam used for the target PUCCH resource for the joint transmission to multi-TPRs of the base station, where the beam indication information is configured to indicate at least one target beam, to realize the beam indication, thus supporting the joint repetition transmission of different PUCCH resources to the multiple TRPs or multiple antenna panels of the base station. Further, the joint repetition transmission of the PUCCH resources may realize a higher spatial diversity gain, a more reliable transmission and a more flexible configuration.

FIG. 10 is a schematic diagram of a communication device according to embodiments of the present invention. As shown in FIG. 10, the communication device 3000 includes: at least one processor 310; and a memory 320 communicatively coupled to the at least one processor 310. The memory 320 stores instructions executable by the at least one processor 310, and the instructions are executed by the at least one processor 310 to cause the at least one processor 310 to implement the method according to any one of claims 1 to 7 or the method according to any one of claims 8 to 16.

Those ordinary skilled in the art can understand that all or part of the operations/steps carried by the methods of the above embodiments can be completed by instructing the relevant hardware through a program, and the program can be stored in a computer-readable storage medium. When the program is executed, one or a combination of the operations/steps of the method embodiments can be performed.

In addition, all functional units in the embodiments of the present invention may be integrated into one processing module, or each unit may exist physically alone, or two or more units may be integrated into one module. The above-mentioned integrated module can be implemented in the form of hardware, and can also be implemented in the form of software function module. If the integrated module is implemented in the form of software functional module, and sold or used as an independent product, it may also be stored in the computer-readable storage medium.

The above-mentioned storage medium may be a read-only memory, a magnetic disk or an optical disk.

The above are only the preferred embodiments of the present invention. It should be noted that for those skilled in the art, without departing from the principle of the present invention, improvements and modifications can be made, and should be regarded as within the scope claimed in the present invention.

## Claims

1. A beam indication method, applicable to a user equipment, UE, the method comprising:
determining, according to beam indication information, a target beam used for a target physical uplink control channel, PUCCH, resource for a joint transmission to multiple transmission and reception points, multi-TRPs, of a base station, wherein the beam indication information is configured to indicate at least one target beam.

2. The beam indication method according to claim 1, further comprising:
receiving downlink control information, DCI, sent by the base station, wherein indication information, PRI, for at least one PUCCH resource is indicated and determined in the DCI;
using the at least one PUCCH resource indicated by the PRI as the target PUCCH resource(s); and
determining the beam indication information in association with the target PUCCH resource(s).

3. The beam indication method according to claim 1, further comprising:
receiving a radio resource control, RRC, signaling sent by the base station, wherein a candidate beam set or a candidate beam combination set is configured in the RRC signaling, and the at least one target beam belongs to the candidate beam set or the candidate beam combination set;
receiving a medium access control layer control unit, MAC-CE, signaling sent by the base station, wherein the MAC-CE signaling indicates the beam indication information for activating the target beam for the joint transmission.

4. The beam indication method according to claim 3, further comprising:
candidate beams in the candidate beam set being independent from each other.

5. The beam indication method according to claim 3, wherein the beam indication information is a code point corresponding to a candidate beam combination, wherein each candidate beam combination includes at least one candidate beam, and wherein the method further comprises:
determining, according to the code point, a target beam combination from the candidate beam combination set, wherein the target beam belongs to the target beam combination.

6. The beam indication method according to claim 5, wherein the candidate beam at least includes a beam available for the joint transmission to the multi-TRPs of the base station.

7. The beam indication method according to any one of claims 1 to 6, further comprising:
jointly and repeatedly transmitting uplink control information, UCI, on the target PUCCH resource with the target beam to the multiple TRPs of the base station.

8. A beam indication method, applicable to a base station, the method comprising:
sending beam indication information to a UE to instruct the UE to determine, according to the beam indication information, a target beam used for a target PUCCH resource for a joint transmission to multi-TRPs of a base station, wherein the beam indication information is configured to indicate at least one target beam.

9. The beam indication method according to claim 8, wherein sending the beam indication information to the UE comprises:
sending an RRC signaling to the UE, wherein a candidate beam set or a candidate beam combination set is configured in the RRC signaling, and the at least one target beam belongs to the candidate beam set or the candidate beam combination set; or
sending an MAC-CE signaling to the UE, wherein the MAC-CE signaling indicates the beam indication information for activating the target beam for the joint transmission.

10. The beam indication method according to claim 9, further comprising:
sending DCI to the UE, wherein indication information, PRI, for at least one PUCCH resource is indicated and determined in the DCI.

11. The beam indication method according to claim 8, wherein in response to determining that the number of the target beams is two or more, sending the beam indication information to the UE comprises:
sending first beam indication information for the joint transmission to the UE; or
sending second beam indication information corresponding to each of the target beams to the UE separately.

12. The beam indication method according to claim 9, further comprising:
candidate beams in the candidate beam set being independent from each other.

13. The beam indication method according to claim 9, wherein each candidate beam combination includes at least one candidate beam, and wherein the beam indication information is a code point corresponding to a candidate beam combination, and the code point is used to instruct the UE to determine a target beam combination from the candidate beam combination set, wherein the target beam belongs to the target beam combination.

14. The beam indication method according to claim 13, wherein the candidate beam at least is a beam available for the joint transmission to the multi-TRPs of the base station.

15. The beam indication method according to any one of claims 8 to 14, further comprising:
receiving UCI that is jointly and repeatedly transmitted on the target PUCCH resource with the target beam to the multiple TRPs or multiple panels of the base station.

16. The beam indication method according to claim 8, further comprising:
in response to using multiple TRP joint transmission, instructing the UE to activate at least one PUCCH resource set, wherein the beam indication information sent to the UE indicates at least one target beam;
in response to using a single TRP transmission, instructing the UE to activate one PUCCH resource set, wherein the beam indication information sent to the UE indicates one target beam.

17. A beam indication apparatus, applicable to a UE, the apparatus comprising:
a determining module, configured to determine, according to beam indication information, a target beam used for a target PUCCH resource for a joint transmission to multi-TRPs of a base station, wherein the beam indication information is configured to indicate at least one target beam.

18. A beam pointing apparatus, applicable to a base station, the apparatus comprising:
a sending module, configured to send beam indication information to a UE to instruct the UE to determine, according to the beam indication information, a target beam used for a target PUCCH resource for a joint transmission to multi-TRPs of a base station, wherein the beam indication information is configured to indicate at least one target beam.

19. A communication device, comprising:
at least one processor; and
a memory communicatively coupled to the at least one processor;
wherein the memory stores instructions executable by the at least one processor, and the instructions are executed by the at least one processor to cause the at least one processor to implement the method according to any one of claims 1 to 16.

20. A computer storage medium having stored therein computer-executable instructions that, after executed by a processor, cause the method according to any one of claims 1 to 16 to be implemented.
